# EUROPÄISCHE PATENTSCHRIFT

(11) **EP 2 730 842 B1**
(45) Veröffentlichungstag und Bekanntmachung des Hinweises auf die Patenterteilung: **16.03.2016**
(21) Anmeldenummer: 13189810.8
(22) Anmeldetag: 23.10.2013
(51) Int. Cl.: F23G 5/027, F23G 5/14, F23G 5/50, F23G 7/10

(54) **Heizungsvorrichtung und Verfahren zur optimierten Verbrennung von Biomasse**
Heating device and method for optimised combustion of biomass
Dispositif de chauffage et procédé de combustion optimisée de biomasse

(30) Priorität: 08.11.2012 DE 102012021799
(43) Veröffentlichungstag der Anmeldung: 14.05.2014
(73) Patentinhaber: ROBERT BOSCH GMBH, 70442 Stuttgart (DE)
(72) Erfinder: Pfitzer, Soeren, 71735 Nussdorf (DE); Wu, Datong, 75181 Pforzheim (DE); Coupek, Daniel, 70199 Stuttgart (DE)

(56) Entgegenhaltungen:
- EP-A1- 1 726 876
- US-A- 4 474 121
- US-A- 4 517 906
- US-A1- 2012 247 374

## Beschreibung

Die Erfindung betrifft eine Heizvorrichtung nach dem Oberbegriff des Patentanspruches 1 sowie ein Verfahren zu deren Regelung nach Anspruch 5.

Heizvorrichtungen haben regelmäßig eine Brennkammer, der Brennstoff und Luft zugeführt wird, um eine Verbrennung des Brennstoffs durchzuführen. Zur Reduktion von Emissionen ist es bekannt, die Brennkammer mit einer Vergaserstufe mit einmündender Primärluftzuführungseinrichtung und einer Verbrennungsstufe mit einmündender Sekundärluftzuführungseinrichtung auszuführen. In der Verbrennungsstufe werden die Verbrennungsgase nachverbrannt und damit ein Ausstoß von Schadstoffen vermieden. Die Vergaserstufe wird auch als Primärbrennkammer und die Verbrennungsstufe als Sekundärbrennkammer bezeichnet.

Durch eine optimierte Luftzuführung werden die Emissionen im Stand der Technik weiter reduziert Besonders effektiv ist insbesondere bei schwankenden Heizleistungen eine Regelung der Primärluftmenge und der Sekundärluftmenge mittels geregelter Strömungserzeuger.

Aus US 4,517,906 A ist eine Heizungsvorrichtung mit einer Brennkammer und einem Nachbrenner bekannt, wobei der Brennkammer eine Primärluftmenge und dem Nachbrenner eine Sekundärluftmenge zugeführt wird. Auf Grundlage eines Sauerstoffgehaltes im Abgas nach dem Nachbrenner erfolgt über einen Mehrgrößenregler eine Regelung der der Brennkammer zugeführten Primärluftmenge und der Brennstoffmenge sowie der dem Nachbrenner zugeführten Sekundärluftmenge.

In EP 1726 876 A1 ist ein Verfahren zur Verbrennung von Festbrennstoffen in einer mehrstufigen Verbrennungsanlage beschrieben, wobei eine Primärluftmenge und eine Sekundärluftmenge in Abhängigkeit von einem Sauerstoffgehalt im Abgas gesteuert werden.

US 4,474,121 A offenbart eine Heizvorrichtung mit einer primären Brennkammer und einer sekundären Brennkammer, wobei die zur primären Brennkammer zugeführte Primärluftmenge und die zur sekundären Brennkammer zugeführte Sekundärluftmenge derart gesteuert wird, dass ein Verhältnis der Primärluftmenge zur Gesamtluftmenge unterhalb eines bestimmten Wertes liegt.

US 2012/0247374 A1 zeigt eine Verbrennungsanlage, wobei eine Verbrennungsregelung anhand einer zugeführten Luftmenge, einer zugeführten Brennstoffmenge und einem ermittelten Sauerstoffgehalt im Abgas erfolgt.

Problematisch ist allerdings vor allem die Verbrennung von stückiger Biomasse. Eine Verbrennungsluftzahl, angebend das Verhältnis zwischen tatsächlich zugeführter Luftmenge und stöchiometrisch benötigter Verbrennungsluftmenge, liegt im Stand der Technik zumeist im Bereich 1,6 bis 2,0. Diese relativ hohe Luftzahl führt zu einem niedrigen Wirkungsgrad der Heizvorrichtung, wobei der Wirkungsgrad die erzielte Heizleistung im Verhältnis zur eingesetzten Energie angibt. Ein Minimum an Schadstoffemissionen bei gleichzeitig hohem Wirkungsgrad bei einer Biomasse-Verbrennung wird in der Theorie bei einer Luftzahl im Bereich von circa 1,3 erzielt. Der verringerte Wirkungsgrad bei einer Luftzahl von 1,6 bis 2,0 wird im Stand der Technik jedoch in Kauf genommen, um paradoxerweise Schadstoffemissionen (CO, Staub) zu vermeiden. Bei einer niedrigeren Luftzahl kommt es nämlich vor allem bei Schwankungen der Brennstoffmenge zu einer Erhöhung der Gesamtemissionen durch erhebliche Emissionsspitzen. Je gröber zu verbrennende stückige Biomasse ist, desto weniger konstant ist deren Zuführung in die Brennkammer und desto höher wird daher die Luftzahl im Stand der Technik gewählt, um die Gesamtemissionen gering zu halten.

Ein weiteres Problem ergibt sich im Stand der Technik dadurch, dass es zur Erzielung einer optimalen Verbrennung erforderlich ist, die Zufuhr von Primärluft in die Vergaserstufe und die Zufuhr von Sekundärluft in die Verbrennungsstufe zeitgleich aber separat zu regeln. Da das Verbrennungssystem eine thermische Trägheit und damit Zeitverzögerung aufweist, wird der Verbrennungsprozess mit den bekannten kennfeldbasierten Reglern oder mit PID-Regler nicht optimal geregelt. Insbesondere entstehen bei solchen Regelungen Wirkungsgradverluste und erhöhte Schadstoffemissionen.

Aufgabe der Erfindung ist es daher, diese und weitere Nachteile des Standes der Technik zu beseitigen und eine Heizvorrichtung sowie ein Verfahren zur Verbrennung von Biomasse zu entwickeln, die sich jeweils durch einen hohen Wirkungsgrad und geringe Schadstoffemissionen auszeichnen, sowie einfach aufgebaut, zuverlässig und kostengünstig sind.

Erfindungsgemäß wird dies mit den Merkmalen der Patentansprüche 1 und 5 gelöst. Vorteilhafte Weiterbildungen sind den Unteransprüchen zu entnehmen.

Die Erfindung betrifft eine Heizvorrichtung mit einer Brennkammer, die eine Vergaserstufe mit einmündender Primärluftzuführungseinrichtung zur Vergasung von Biomasse und eine Verbrennungsstufe mit einmündender Sekundärluftzuführungseinrichtung zur Nachverbrennung eines Verbrennungsgasstroms aufweist, wobei die Primärluftzuführungseinrichtung einen von einem ersten Regler auf einen ersten Sollwert geregelten ersten Strömungserzeuger und die Sekundärluftzuführungseinrichtung einen von einem zweiten Regler auf einen zweiten Sollwert geregelten zweiten Strömungserzeuger aufweist, und wobei ein die Sollwerte ausgebender Mehrgrößenregler mit dem ersten Regler und dem zweiten Regler sowie zur Bestimmung der Sollwerte mit einem Sauerstoffsensor in einem Abgaskanal hinter der Verbrennungsstufe kommunizierend verbunden ist. Dabei ist der Mehrgrößenregler ein modellbasierter prädiktiver Regler, der hierarchisch den Reglern zur Regelung der Strömungserzeuger übergeordnet ist, wobei der Mehrgrößenregler zuerst einen mit dem Sauerstoffsensor ermittelten Sauerstoffgehalt im Abgaskanal empfängt und dann die Sollwerte der Primärluft und der Sekundärluft auf Basis eines hinterlegten dynamischen Systemmodells des zu regelnden Verbrennungsprozesses und des Sauerstoffgehalts im Abgaskanal ermittelt und ausgibt.

Bei der Biomasse-Verbrennung wird der Brenner von mehreren Betriebsparametern beeinflusst (z.B. Primärluft, Sekundärluft, Brennkammerdruck, Restsauerstoff und CO im Abgas), bei denen starke Wechselwirkungen zwischen den einzelnen Ein- und Ausgangsgrößen herrschen. Für eine sehr gute Regelung des Verbrennungsprozesses ist es ausreichend den Restsauerstoffgehalt im Abgas als Eingangsgröße für den Mehrgrößenregler zu nutzen. Der Sauerstoffgehalt im Abgas hängt nämlich von den beiden Sollwerten der Strömungserzeuger ab, Dabei verhindert der Mehrgrößenregler, dass sich die beiden zunächst unabhängigen Regler gegenseitig negativ beeinflussen und aufschaukeln. Zeitverzögerte Reaktionen zwischen der zugeführten Primärluftmenge und der zugeführten Sekundärluft werden berücksichtigt. Dadurch ist der Mehrgrößenregler geeignet, mithilfe beider Sollwerte ein optimales Ergebnis hinsichtlich der Effizienz und den Schadstoffemissionen zu erzielen. Das Regelungskonzept beruht mithin auf einer hierarchischen Reglerstruktur, wobei der Mehrgrößenregler den Reglern zur Regelung der Strömungserzeuger übergeordnet ist. Die Regler sind dazu geeignet, die Brennerleistung und den Sauerstoffverlauf zu stabilisieren, wodurch die Schadstoffemissionen verringert werden. Gleichzeitig sind die Temperaturen, Drücke und Volumenströme der Heizvorrichtung konstant regelbar. Insbesondere ist diese am Optimum für eine vom Benutzer vorgegebene Luftzahl und Brennerleistung betreibbar.

Sowohl der erste als auch der zweite Regler kann jeweils ein PID-Regler sein, um eine genaue und schnelle Regelung auf den jeweiligen Sollwert zu erzielen. Als Brennkammer eignen sich insbesondere unterteilte Bauformen, bei denen eine die Vergasungsstufe ausbildende Primärbrennkammer und eine die Verbrennungsstufe ausbildende Sekundärbrennkammer vorgesehen sind. Die Primärbrennkammer ist dann vorzugsweise über einen verjüngten Abschnitt mit der Sekundärbrennkammer strömungsverbunden.

Die benötigten Zusätzlichen Komponenten für die Regelung sind verhältnismäßig preiswert und es sind nahezu keine Änderungen an der Ausgestaltung der Brennkammer notwendig, sodass sich ein einfacher und zuverlässiger Aufbau realisieren lässt.

Es ist vorgesehen, dass der Mehrgrößenregler ein modellbasierter prädiktiver Regler ist Mittels eines dynamischen Systemmodells des zu regelnden Verbrennungsprozesses wird eine Prädiktion der Systemzustandsentwicklung in Abhängigkeit von den Stellgrößen für einen Zeithorizont vorausberechnet. Mit Hilfe von Optimierungsverfahren sind die Stellgrößen bzw. Sollwerte für den Zeithorizont bestimmbar, welche die Zielerreichung optimieren, insbesondere die Luftzahl und die Leistung. Ein Modell ist geeignet, den zukünftigen Verlauf der Regeleingangsgröße, insbesondere den Sauerstoffgehalt im Abgas, im Voraus zu berechnen. Der Mehrgrößenregler kann dann bereits eingreifen, bevor es zu einem Regler-Eingangswertsprung (Luftzahlschwankung) kommt.

Bevorzugt werden dabei immer antizipierte Luftzahlschwankungen für mehrere Zeitschritte in der Zukunft berechnet. Damit ist das zukünftige Systemverhalten mit dem Modell bis zum Ende des Vorhersagehorizontes bestimmbar. Darauf aufbauend kann eine optimale Stellgrößenfolge für die zukünftigen Zeitschritte dieses Vorhersagehorizontes berechnet werden. Von dieser Folge werden dann nur die nächsten Sollwerte vom Mehrgrößenregler an den ersten und zweiten Regler weitergegeben. Die scheinbar nicht verwerteten weiteren Stellgrößen fließen implizit in die erste Stellgrößenänderung ein. Beim nächsten Abtastschritt hat sich die Stellgröße und somit der Systemausgang geändert, d.h. es liegt ein neuer Messwert des Sauerstoffgehalts im Abgaskanal vor. Diese neue Information wird für die Berechnung der nächsten Stellgröße herangezogen. Durch die Berechnung mehrerer Werte in die Zukunft, kann eine zukünftige Stellgrößenfolge ermittelt werden, statt nur einem einzigen nächsten Schritt. Dadurch kann der Regler seine Eingriffe planen und muss nicht versuchen die gesamte Regelabweichung innerhalb eines Zeitschrittes komplett auszuregeln. Ein aufschaukelndes und destabilisierendes Regelverhalten wird so verhindert.

Das gemäß der Erfindung in dem Mehrgrößenregler hinterlegte Systemmodell eines Regelkreises, das die Sollwerte und einen Sauerstoffgehalt im Abgaskanal umfasst, ist zunächst unbekannt und lässt sich experimentell ermitteln, z.B. im Rahmen einer Konfigurationsroutine. Außerdem können laufende Optimierungen anhand der gewonnenen Daten vorgenommen werden. Regelungenauigkeiten durch theoretische Systemmodelle und sich ändernder Verbrennungsparameter, bspw. der Brennwert oder der Feuchtigkeitsgehalt des Brennstoffs, werden so verhindert.

Ein erfindungsgemäßer, modellbasierter, prädiktiver Regler ist ein Mehrgrößenregler. Dieser ist geeignet eine Regelung auch bei einer Erweiterung mittels zusätzlicher Sensoren und Aktuatoren durchzuführen. Neben der Sauerstoffkonzentration kann beispielsweise auch die CO-Konzentration im Abgas gemessen werden. Der Regler berechnet dann je nach Gewichtungsfaktoren das Funktionsoptimum und somit die Stellgrößenfolge für die Sollwerte der Primär- und Sekundärluft. Die Gewichtungsfaktoren sollten im Rahmen einer Reglerkonfiguration eingestellt werden. Hierbei ist auch bestimmbar, welche Zielwerte favorisiert behandelt werden, sofern sie in Konkurrenz zueinander stehen. Als weitere Stellgrößen zur Optimierung der Verbrennung eignen sich die Temperatur, Drücke, CO, CO2, NOx und Staub in den Brennkammern, Abgasleitungen und auch in den Luftzuführungen.

Zur Vermeidung von Regelungenauigkeiten wird von einer anderen Weiterentwicklung der Erfindung vorgeschlagen, dass die Primärluftzuführungseinrichtung einen mit dem ersten Regler kommunizierend verbundenen ersten Luftmassendurchflusssensor und die Sekundärluftzuführungseinrichtung einen mit dem zweiten Regler kommunizierend verbundenen zweiten Luftmassendurchflusssensor aufweisen. Hierdurch ist die Luftmasse exakt bestimmbar und muss nicht über die Leistung der Strömungserzeuger bestimmt werden, was bei wechselnden Gegen- und Ansaugdrücken zu Fehlern führen kann. Durch die Bestimmung der Luftmassen ist es möglich, die Primärluftmenge mit dem ersten Regler auf den ersten Sollwert und die Sekundärluftmenge mit dem zweiten Regler auf den zweiten Sollwert zu regeln.

In einer Variante der Erfindung mündet eine Brennstoffzufuhreinrichtung in die Vergaserstufe der Brennkammer, wobei die Brennstoffzufuhreinrichtung einen Leistungsregler zur Regelung einer der Vergaserstufe zugeführten Brennstoffmenge pro Zeit aufweist. Hierdurch ist die Heizeinrichtung geeignet, eine leistungsgerechte Verbrennung durchzuführen. Bevorzugt ist der Leistungsregler mit dem Mehrgrößenregler kommunizierend verbunden. Dadurch können die Daten der Leistungsmodulation bei der Berechnung der Sollwerte berücksichtigt werden, insbesondere indem sie in das Systemmodell mit einbezogen werden. Ein solcher Leistungsregler kann unabhängig von dem Mehrgrößenregler ausgelegt sein. Dann erfolgt eine parallele Regelung durch den Leistungsregler und den Mehrgrößenregler. Alternativ wird der Leistungsregler dem Mehrgrößenregler hierarchisch übergeordnet. Damit erfolgt die Regelung der Heizeinrichtung primär auf die Leistung und erst nachgeordnet auf eine möglichst schadstoffarme und effiziente Verbrennung.

Bevorzugt erfolgt die Leistungsregelung über eine Sauerstoffbilanzierung, die eine Berechnung der aktuellen Brennerleistung aus dem Massenstrom der zugeführten Luft und dem Restsauerstoff im Abgas umfasst. Es ist dann möglich die aktuelle Brennerleistung zu erfassen und diese durch den Leistungsregler zu stabilisieren. Damit können die negativen Effekte durch Brennstoffschwankungen beseitigt werden.

Besonders gut geeignet ist eine erfindungsgemäße Heizvorrichtung mit Ihrer Regleranordnung, wenn diese eine Kraftwärmekopplungsvorrichtung (KWK) ist. Hier lassen sich dann nicht nur die Emissionen minimieren, sondern gleichzeitig ein Wirkungsgrad-Optimum finden aus minimalen Emissionen und maximaler elektrischer Leistung. Die elektrische Leistung kann hierfür erfasst und vom Mehrgrößenregler berücksichtigt werden.

Die Erfindung betrifft weiterhin ein Verfahren zum Betrieb einer erfindungsgemäßen Heizvorrichtung, wie sie insbesondere vorstehend beschrieben ist, umfassend ein Regeln einer der Vergaserstufe zugeführten Primärluftmenge durch Regeln des ersten Strömungserzeugers auf den ersten Sollwert, ein Regeln einer der Verbrennungsstufe zugeführten Sekundärluftmenge durch Regeln des zweiten Strömungserzeugers auf den zweiten Sollwert, ein Empfangen eines mit dem Sauerstoffsensor ermittelten Sauerstoffgehalts im Abgaskanal durch den Mehrgrößenregler, Bestimmen einer aktuellen Luftzahl, angebend das Verhältnis der Summe der Primärluftmenge und der Sekundärluftmenge zu der stöchiometrisch benötigten Verbrennungsluftmenge, mit Hilfe des bestimmten Sauerstoffgehalts im Abgaskanal, und umfassend ein Regeln der Luftzahl auf eine Sollluftzahl durch Anpassung des ersten und zweiten Sollwertes mittels des Mehrgrößenreglers. Dabei ermittelt der Mehrgrößenregler nach Empfang des Sauerstoffgehalts im Abgaskanal die Sollwerte der Primärluft und der Sekundärluft auf Basis eines hinterlegten dynamischen Systemmodells des zu regelnden Verbrennungsprozesses und des Sauerstoffgehalts im Abgas und gibt diese aus.

Damit werden die Vorteile der Heizvorrichtung verfahrensgemäß realisiert. Insbesondere ist die naturgemäß ungleichmäßige Verbrennung von Biomasse mit einem hohen Wirkungsgrad und bei geringen Schadstoffemissionen durchführbar. Dabei ist der Aufbau einfach, zuverlässig und kostengünstig umsetzbar.

Eine geringe Schadstoffemission und Effizienz wird bei einer speziellen Auslegung des Verfahrens erreicht, bei der die Sollluftzahl zwischen 1,2 und 1,4 liegt. Besonders bevorzugt beträgt die Sollluftzahl 1,3. Weiterhin sollte sie konstant sein. Eine solche Sollluftzahl führt zu einer hohen Effizienz der Heizvorrichtung. Verbrennungsschwankungen durch stückige Biomasse werden mit dem Verfahren ausgeregelt und die Schadstoffemissionen sind durchgehend niedrig.

Zur Leistungsmodulation bietet sich eine Variante der Erfindung an, bei welcher der Vergaserstufe der Brennkammer eine Brennstoffmenge geregelt zugeführt wird. Auch bei einer Leistungsmodulation kann verfahrensgemäß ein Minimum an Schadstoffemission bei hoher Effizienz erreicht werden.

In einer speziellen Auslegung des Verfahrens, erfolgt die Regelung der zugeführten Brennstoffmenge auf einen Brennstoffmengensollwert anhand einer Sauerstoffbilanzierung umfassend eine mit der Primärluftmenge und der Sekundärluftmenge zugeführte Sauerstoffmenge abzüglich der den Abgaskanal passierenden Sauerstoffmenge. Verfahrensgemäß werden die hierfür benötigten Sauerstoffwerte ohnehin bestimmt, sodass keine zusätzlichen Sensoren erforderlich sind.

Eine Fortentwicklung des erfindungsgemäßen Verfahrens sieht vor, dass der Mehrgrößenregler den Regelkreis, umfassend die Sollwerte und den Sauerstoffgehalt, zur Anpassung der Sollwerte simuliert. Durch eine Simulation sind wechselseitige sowie zeitverzögerte Einflüsse auf den Zielwert vorherbestimmbar und können bei der Vorgabe der Sollwerte berücksichtigt werden.

Es bietet sich an, die den Abgaskanal passierende Sauerstoffmenge mit Hilfe eines bestimmten Sauerstoffgehalts im Abgaskanal zu berechnen. Insbesondere kann die Berechnung der den Abgaskanal passierenden Sauerstoffmenge durch Bildung des Produktes aus dem bestimmten Sauerstoffgehalt im Abgaskanal und einem bestimmten Volumenstrom im Abgaskanal erfolgen. Alternativ ist eine Berechnung der den Abgaskanal passierenden Sauerstoffmenge näherungsweise durch Bildung des Produktes aus dem bestimmten Sauerstoffgehalt im Abgaskanal und der Summe aus Primär- und Sekundärluftmenge möglich. Der Sauerstoffgehalt in der Umgebungsluft und damit in der Primärluftmenge und der Sekundärluftmenge beträgt circa 20,95%.

Gemäß einer speziellen Verfahrensausbildung wird bei der Simulation des Regelkreises anhand der aktuellen Sollwerte und des bestimmten aktuellen Sauerstoffgehalts im Abgaskanal ein für wenigstens einen zukünftigen Zeitpunkt antizipierter Sauerstoffgehalt im Abgaskanal berechnet und anhand des antizipierten Sauerstoffgehalts eine Anpassung der Sollwerte zur Einhaltung der Sollluftzahl durchgeführt. Angestrebt wird insbesondere eine Regelung, die bei möglichst geringen Stellgrößenänderungen der Solltrajektorie möglichst gut folgen kann.

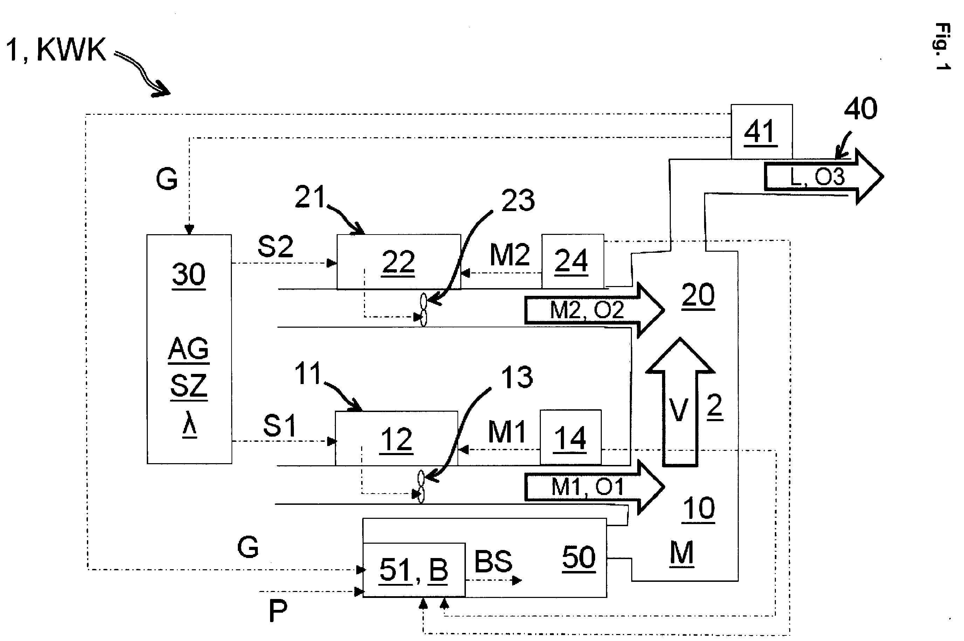

Die Zeichnung stellt ein Ausführungsbeispiel der Erfindung dar und zeigt in
Fig. 1 eine Heizvorrichtung.

In Fig. 1 erkennt man eine Heizvorrichtung 1, die Teil einer Kraftwärmekopplungsvorrichtung KWK ist und eine Brennkammer 2 aufweist. Letztere ist in eine Vergaserstufe 10 mit einmündender Primärluftzuführungseinrichtung 11 zur Vergasung von Biomasse M und eine Verbrennungsstufe 20 mit einmündender Sekundärluftzuführungseinrichtung 21 zur Nachverbrennung eines Verbrennungsgasstroms V unterteilt. An die Verbrennungsstufe 20 schließt sich ein Abgaskanal 40 strömungsverbunden an.

Die Primärluftzuführungseinrichtung 11 verfügt über einen Rohrabschnitt, in dem ein erster Strömungserzeuger 13 angeordnet ist, welcher von einem ersten Regler 12 auf einen ersten Sollwert S1 geregelt wird. Insbesondere erfolgt hierdurch eine Regelung auf eine zugeführte Primärluftmenge M1. Hierfür ist der erste Regler 12 kommunizierend mit einem ersten Luftmassendurchflusssensor 14 verbunden, der am Rohrabschnitt der Primärluftzuführungseinrichtung 11 angeordnet ist, insbesondere in Strömungsrichtung hinter dem ersten Strömungserzeuger 13, und die tatsächlich zugeführte Primärluftmenge M1 bestimmt.

Weiterhin erkennt man, dass die Sekundärluftzuführungseinrichtung 21 ebenso über einen Rohrabschnitt verfügt, in welchem ein zweiter Strömungserzeuger 23 angeordnet ist. Dieser wird von einem zweiten Regler 22 auf einen zweiten Sollwert S2 geregelt. Hier erfolgt die Regelung insbesondere auf eine der Verbrennungsstufe 10 zugeführte Sekundärluftmenge M2. Um dies umzusetzen, hat die Sekundärluftzuführungseinrichtung 21 einen mit dem zweiten Regler 22 kommunizierend verbundenen zweiten Luftmassendurchflusssensor 24 zur Bestimmung der tatsächlich zugeführten Primärluftmenge M1. Dieser ist im Bereich des Rohrabschnitts der Sekundärluftzuführungseinrichtung 21 angeordnet, vor allem in Strömungsrichtung hinter dem zweiten Strömungserzeuger 23.

Die Sollwerte S1, S2 werden von einem hierarchisch übergeordneten Mehrgrößenregler 30 an die Regler 12, 22 ausgegeben. Er ist hierfür mit dem ersten Regler 12 und dem zweiten Regler 22 sowie zur Bestimmung der Sollwerte S1, S2 mit einem Sauerstoffsensor 41 im Abgaskanal 40 hinter der Verbrennungsstufe 20 kommunizierend verbunden.

Der Mehrgrößenregler 30 ist ein modellbasierter prädiktiver Regler, in dem ein experimentell ermitteltes Systemmodell eines Regelkreises hinterlegt ist, welches die Sollwerte S1, S2 und einen Sauerstoffgehalt G im Abgaskanal 40 umfasst Zur Ausgabe der Sollwerte S1, S2 wird zunächst ein mit dem Sauerstoffsensor 41 ermittelter Sauerstoffgehalts G im Abgaskanal 40 vom Mehrgrößenregler 30 empfangen. Darauf aufbauend erfolgt eine Bestimmung der aktuellen Luftzahl λ, die sich aus dem Verhältnis der Summe der Primärluftmenge M1 und der Sekundärluftmenge M2 zu der stöchiometrisch benötigten Verbrennungsluftmenge ergibt. Die stöchiometrisch benötigte Verbrennungsluftmenge wird über den bestimmten Sauerstoffgehalts G im Abgaskanal 40 bestimmt Mit dieser Information wird die Luftzahl λ auf eine Sollluftzahl SZ geregelt, insbesondere durch Anpassung des ersten und zweiten Sollwertes S1, S2 mittels des Mehrgrößenreglers 30. Die Sollluftzahl SZ beträgt bei der stückigen Biomasseverbrennung bevorzugt zwischen 1,2 und 1,4 und besonders bevorzugt 1,3. Um auf die Sollluftzahl SZ zu regeln, führt der Mehrgrößenregler 30 eine Simulation des Regelkreises durch, wobei der Regelkreis den Sauerstoffgehalt G in Abhängigkeit der Sollwerte S1, S2 umfasst Dies geschieht für wenigstens einen antizipierter Sauerstoffgehalt AG im Abgaskanal zu einem zukünftigen Zeitpunkt. Mit Hilfe des Sauerstoffgehalts wird dann eine Anpassung der Sollwerte S1, S2 zur Einhaltung der Sollluftzahl SZ durchgeführt.

Ferner mündet in die Vergaserstufe 10 der Brennkammer 10 eine Brennstoffzufuhreinrichtung 50. Diese verfügt über einen Leistungsregler 51 zur Regelung einer der Vergaserstufe 10 zugeführten Brennstoffmenge B pro Zeit. Ein notwendiger Brennstoffmengensollwert BS ergibt sich aus einer extern vorgegebenen und angeforderten Leistung P. Zur Regelung der zugeführten Brennstoffmenge B auf den Brennstoffmengensollwert BS wird eine Sauerstoffbilanzierung vorgenommen, welche sich aus der zugeführte Sauerstoffmenge O1 und O2 der Primärluftmenge M1 und der Sekundärluftmenge M2 abzüglich der den Abgaskanal 40 passierenden (Rest-) Sauerstoffmenge 03 ergibt Hierfür ist der Leistungsregler 51 kommunizierend mit dem ersten Luftmassendurchflusssensor 14, dem zweiten Luftmassendurchflusssensor 24, und einem Sauerstoffsensor 41 im Abgaskanal 40 hinter der Verbrennungsstufe 20 verbunden. Mit dem Sauerstoffsensor 41 wird ein Sauerstoffgehalt G im Abgaskanal 40 bestimmt. Die Sauerstoffmenge 03 ist mit Hilfe des Sauerstoffgehalts G über die Primärluftmenge M1 und die Sekundärluftmenge M2 bestimmbar. Der Sauerstoffgehalt der Primärluftmenge M1 beträgt bei der Nutzung von Umgebungsluft circa 20,95%. Gleiches gilt für die Sekundärluftmenge M2. Letztere kann jedoch wenigstens teilweise mit rückgeführtem Abgas angereichert sein. Dann sollte in der Sekundärluftzuführungseinrichtung 21 eine zusätzliche Sauerstoffgehaltsbestimmung mit einem weiteren Sauerstoffsensor erfolgen.

## Patentansprüche

1. Heizvorrichtung (1) mit einer Brennkammer (2), die in eine Vergaserstufe (10) und eine Verbrennungsstufe (20) unterteilt ist, wobei
A) die Vergaserstufe (10) mit einmündender Primärluftzuführungseinrichtung (11) zur Vergasung von Biomasse (M) und
B) die Verbrennungsstufe (20) mit einmündender Sekundärluftzuführungseinrichtung (21) zur Nachverbrennung eines Verbrennungsgasstroms (V) aufweist, wobei
C) die Primärluftzuführungseinrichtung (11) einen von einem ersten Regler (12) auf einen ersten Sollwert (S1) geregelten ersten Strömungserzeuger (13) und
D) die Sekundärluftzuführungseinrichtung (21) einen von einem zweiten Regler (22) auf einen zweiten Sollwert (S2) geregelten zweiten Strömungserzeuger (23) aufweist,
**dadurch gekennzeichnet, dass** ein die Sollwerte (S1, S2) ausgebender Mehrgrößenregler (30) mit dem ersten Regler (12) und dem zweiten Regler (22) sowie zur Bestimmung der Sollwerte (S1, S2) mit einem Sauerstoffsensor (41) in einem Abgaskanal (40) hinter der Verbrennungsstufe (20) kommunizierend verbunden ist, wobei der Mehrgrößenregler ein modellbasierter prädiktiver Regler ist, der hierarchisch den Reglern zur Regelung der Strömungserzeuger übergeordnet ist, wobei der Mehrgrößenregler zuerst einen mit dem Sauerstoffsensor (41) ermittelten Sauerstoffgehalt (G) im Abgaskanal (40) empfängt und dann die Sollwerte (S1, S2) der Primärluft und der Sekundärluft auf Basis eines hinterlegten dynamischen Systemmodells des zu regelnden Verbrennungsprozesses und des Sauerstoffgehalts (G) im Abgaskanal (40) ermittelt und ausgibt.

2. Heizvorrichtung (1) nach Anspruch 1, **dadurch gekennzeichnet, dass** die Primärluftzuführungseinrichtung (11) einen mit dem ersten Regler (12) kommunizierend verbundenen ersten Luftmassendurchflusssensor (14) und die Sekundärluftzuführungseinrichtung (21) einen mit dem zweiten Regler (22) kommunizierend verbundenen zweiten Luftmassendurchflusssensor (24) aufweisen.

3. Heizvorrichtung (1) nach einem der vorhergehenden Ansprüche, **dadurch gekennzeichnet, dass** eine Brennstoffzufuhreinrichtung (50) in die Vergaserstufe (10) der Brennkammer (2) mündet, wobei die Brennstoffzufuhreinrichtung (50) einen Leistungsregler (51) zur Regelung einer der Vergaserstufe (10) zugeführten Brennstoffmenge (B) pro Zeit aufweist.

4. Heizvorrichtung (1) nach einem der vorhergehenden Ansprüche, **dadurch gekennzeichnet, dass** diese eine Kraftwärmekopplungsvorrichtung (KWK) ist.

5. Verfahren zum Betrieb einer Heizvorrichtung (1) nach einem der vorhergehenden Ansprüche, umfassend die folgenden Schritte:
a) Regeln einer der Vergaserstufe (10) zugeführten Primärluftmenge (M1) durch Regeln des ersten Strömungserzeugers (13) auf den ersten Sollwert (S1),
b) Regeln einer der Verbrennungsstufe (10) zugeführten Sekundärluftmenge (M2) durch Regeln des zweiten Strömungserzeugers (23) auf den zweiten Sollwert (S2),
c) Empfangen eines mit dem Sauerstoffsensor (41) ermittelten Sauerstoffgehalts (G) im Abgaskanal (40) durch den Mehrgrößenregler (30),
d) Bestimmen einer aktuellen Luftzahl (λ), angebend das Verhältnis der Summe der Primärluftmenge (M1) und der Sekundärluftmenge (M2) zu der stöchiometrisch benötigten Verbrennungsluftmenge, mit Hilfe des bestimmten Sauerstoffgehalts (G) im Abgaskanal (40),
e) Regeln der Luftzahl (λ) auf eine Sollluftzahl (SZ) durch Anpassung des ersten und zweiten Sollwertes (S1, S2) mittels des Mehrgrößenreglers (30), wobei
f) nach Empfang des Sauerstoffgehalts (G) im Abgaskanal (40) durch den Mehrgrößenregler dieser die Sollwerte (S1, S2) der Primärluft und der Sekundärluft auf Basis eines Systemmodells und des Sauerstoffgehalts (G) im Abgas ermittelt und ausgibt.

6. Verfahren nach Anspruch 5, wobei die Sollluftzahl (SZ) zwischen 1,2 und 1,4 liegt.

7. Verfahren nach einem der Ansprüche 5 oder 6 **dadurch gekennzeichnet, dass** der Vergaserstufe (10) der Brennkammer (2) eine Brennstoffmenge (B) geregelt zugeführt wird.

8. Verfahren nach Anspruch 7, **dadurch gekennzeichnet, dass** die Regelung der zugeführten Brennstoffmenge (B) auf einen Brennstoffmengensollwert (BS) anhand einer Sauerstoffbilanzierung umfassend eine mit der Primärluftmenge (M1) und der Sekundärluftmenge (M2) zugeführte Sauerstoffmenge (O1+O2) abzüglich der den Abgaskanal (40) passierenden Sauerstoffmenge (03) erfolgt.

9. Verfahren nach einem der Ansprüche 5 bis 8, **dadurch gekennzeichnet, dass** der Mehrgrößenregler (30) den Regelkreis, umfassend die Sollwerte (S1, S2) und den Sauerstoffgehalt (G), zur Anpassung der Sollwerte (S1, S2) simuliert.

10. Verfahren nach Anspruch 9, **dadurch gekennzeichnet, dass** bei der Simulation des Regelkreises anhand der aktuellen Sollwerte (S1, S2) und des bestimmten aktuellen Sauerstoffgehalts (G) im Abgaskanal (40) ein für wenigstens einen zukünftigen Zeitpunkt antizipierter Sauerstoffgehalt (AG) im Abgaskanal (40) berechnet und anhand des 15 antizipierten Sauerstoffgehalts (AG) eine Anpassung der Sollwerte (S1, S2) zur Einhaltung der Sollluftzahl (SZ) durchgeführt wird.

## Claims

1. Heating device (1) with a combustion chamber (2), which is divided into a gasifier stage (10) and a combustion stage (20), wherein
A) the gasifier stage (10) has an entering primary air supply device (11) for the gasification of biomass (M) and
B) the combustion stage (20) has an entering secondary air supply device (21) for the postcombustion of a combustion gas stream (V), wherein
C) the primary air supply device (11) has a first flow generator (13), which is controlled to a first setpoint value (S1) by a first controller (12) and
D) the secondary air supply device (21) has a second flow generator (23), which is controlled to a second setpoint value (S2) by a second controller (22),
**characterized in that** a multi-variable controller (30), outputting the setpoint values (S1, S2), is connected in a communicating manner to the first controller (12) and the second controller (22) and, for determining the setpoint values (S1, S2), to an oxygen sensor (41) in an exhaust duct (40) downstream of the combustion stage (20), wherein the multi-variable controller is a model-based predictive controller that is hierarchically superior to the controllers for controlling the flow generators, wherein the multi-variable controller first receives an oxygen content (G) in the exhaust duct (40), determined by the oxygen sensor (41), and then determines and outputs the setpoint values (S1, S2) of the primary air and of the secondary air on the basis of a stored dynamic system model of the combustion process to be controlled and of the oxygen content (G) in the exhaust duct (40).

2. Heating device (1) according to Claim 1, **characterized in that** the primary air supply device (11) has a first air-mass flow sensor (14), connected in a communicating manner to the first controller (12), and the secondary air supply device (21) has a second air-mass flow sensor (24), connected in a communicating manner to the second controller (22).

3. Heating device (1) according to one of the preceding claims, **characterized in that** a fuel supply device (50) enters the gasifier stage (10) of the combustion chamber (2), wherein the fuel supply device (50) has an output controller (51) for controlling an amount of fuel (B) supplied per unit of time to the gasifier stage (10).

4. Heating device (1) according to one of the preceding claims, **characterized in that** it is a combined heat and power generating device (KWK).

5. Method for operating a heating device (1) according to one of the preceding claims, comprising the following steps:
a) controlling an amount of primary air (M1) supplied to the gasifier stage (10) by controlling the first flow generator (13) to the first setpoint value (S1),
b) controlling an amount of secondary air (M2) supplied to the combustion stage (10) by controlling the second flow generator (23) to the second setpoint value (S2),
c) the multi-variable controller (30) receiving an oxygen content (G) in the exhaust duct (40) determined by the oxygen sensor (41),
d) determining a current air/fuel ratio (λ), indicating the ratio of the sum of the amount of primary air (M1) and the amount of secondary air (M2) to the stoichiometrically required amount of combustion air, with the aid of the determined oxygen content (G) in the exhaust duct (40),
e) controlling the air/fuel ratio (λ) to a setpoint air/fuel ratio (SZ) by matching the first and second setpoint values (S1, S2) by means of the multi-variable controller (30), wherein
f) after the oxygen content (G) in the exhaust duct (40) has been received by the multi-variable controller, the latter determines and outputs the setpoint values (S1, S2) of the primary air and the secondary air on the basis of a stored dynamic system model of the combustion process to be controlled and of the oxygen content (G) in the exhaust gas.

6. Method according to Claim 5, wherein the setpoint air/fuel ratio (SZ) lies between 1.2 and 1.4.

7. Method according to either of Claims 5 and 6, **characterized in that** the gasifier stage (10) of the combustion chamber (2) is supplied an amount of fuel (B) in a controlled manner.

8. Method according to Claim 7, **characterized in that** the controlling of the supplied amount of fuel (B) to a setpoint value for the amount of fuel (BS) takes place on the basis of an oxygen balancing comprising an amount of oxygen (O1+O2) supplied with the amount of primary air (M1) and the amount of secondary air (M2), less the amount of oxygen (03) passing the exhaust duct (40).

9. Method according to one of Claims 5 to 8, **characterized in that** the multi-variable controller (30) simulates the control loop, comprising the setpoint values (S1, S2) and the oxygen content (G), for matching the setpoint values (S1, S2).

10. Method according to Claim 9, **characterized in that**, in the simulation of the control loop on the basis of the current setpoint values (S1, S2) and the determined current oxygen content (G) in the exhaust duct (40), an oxygen content (AG) in the exhaust duct (40) anticipated for at least one future point in time is calculated and a matching of the setpoint values (S1, S2) is carried out on the basis of the anticipated oxygen content (AG) to maintain the setpoint air/fuel ratio (SZ).

## Revendications

1. Dispositif de chauffage (1) avec une chambre de combustion (2), qui est divisée en un étage de gazéification (10) et un étage de combustion (20), dans lequel
A) l'étage de gazéification (10) présente un dispositif de fourniture d'air primaire (11) qui y débouche pour la gazéification de biomasse (M) et
B) l'étage de combustion (20) présente un dispositif de fourniture d'air secondaire (21) qui y débouche pour la postcombustion d'un courant de gaz de combustion (V), dans lequel
C) le dispositif de fourniture d'air primaire (11) présente un premier générateur d'écoulement (13) réglé par un premier régulateur (12) à une première valeur de consigne (S1) et
D) le dispositif de fourniture d'air secondaire (21) présente un deuxième générateur d'écoulement (23) réglé par un deuxième régulateur (22) à une deuxième valeur de consigne (S2),
**caractérisé en ce qu'**un régulateur de plusieurs grandeurs (30) produisant les valeurs de consigne (S1, S2) est relié en communication au premier régulateur (12) et au deuxième régulateur (22) ainsi que, pour la détermination des valeurs de consigne (S1, S2), à un détecteur d'oxygène (41) dans un canal de gaz d'échappement (40) derrière l'étage de combustion (20), dans lequel le régulateur de plusieurs grandeurs est un régulateur prédictif basé sur un modèle, qui est disposé hiérarchiquement au-dessus des régulateurs destinés à la régulation des générateurs d'écoulement, dans lequel le régulateur de plusieurs grandeurs reçoit d'abord une teneur en oxygène (G) dans le canal de gaz d'échappement (40) détectée avec le détecteur d'oxygène (41) et détermine et émet ensuite les valeurs de consigne (S1, S2) de l'air primaire et de l'air secondaire sur la base d'un modèle de système dynamique mémorisé du processus de combustion à réguler et de la teneur en oxygène (G) dans le canal de gaz d'échappement (40).

2. Dispositif de chauffage (1) selon la revendication 1, **caractérisé en ce que** le dispositif de fourniture d'air primaire (11) présente un premier détecteur de débit massique d'air (14) relié en communication au premier régulateur (12) et le dispositif de fourniture d'air secondaire (21) présente un deuxième détecteur de débit massique d'air (24) relié en communication au deuxième régulateur (22).

3. Dispositif de chauffage (1) selon l'une quelconque des revendications précédentes, **caractérisé en ce qu'**un dispositif de fourniture de combustible (50) débouche dans l'étage de gazéification (10) de la chambre de combustion (2), dans lequel le dispositif de fourniture de combustible (50) présente un régulateur de puissance (51) pour la régulation d'une quantité de combustible (B) fournie par unité de temps à l'étage de gazéification (10).

4. Dispositif de chauffage (1) selon l'une quelconque des revendications précédentes, **caractérisé en ce que** celui-ci est une unité de cogénération (KWK).

5. Procédé de conduite d'un dispositif de chauffage (1) selon l'une quelconque des revendications précédentes, comportant les étapes suivantes:
a) régulation d'une quantité d'air primaire (M1) fournie à l'étage de gazéification (10) par régulation du premier générateur d'écoulement (13) à la première valeur de consigne (S1),
b) régulation d'une quantité d'air secondaire (M2) fournie à l'étage de combustion (10) par régulation du deuxième générateur d'écoulement (23) à la deuxième valeur de consigne (S2),
c) réception d'une teneur en oxygène (G) dans le canal de gaz d'échappement (40) déterminée avec le détecteur d'oxygène (41) par le régulateur de plusieurs grandeurs (30),
d) détermination de l'excès d'air actuel (λ), indiquant le rapport entre la somme de la quantité d'air primaire (M1) et de la quantité d'air secondaire (M2) et la quantité d'air de combustion nécessaire au point de vue stoechiométrique, à l'aide de la teneur en oxygène (G) déterminée dans le canal de gaz d'échappement (40),
e) régulation de l'excès d'air (λ) à un excès d'air de consigne (SZ) par adaptation de la première et de la deuxième valeurs de consigne (S1, S2) au moyen du régulateur de plusieurs grandeurs (30), dans lequel
f) après réception de la teneur en oxygène (G) dans le canal de gaz d'échappement (40) par le régulateur de plusieurs grandeurs, celui-ci détermine et émet les valeurs de consigne (S1, S2) de l'air primaire et de l'air secondaire sur la base d'un modèle de système dynamique mémorisé du processus de combustion à réguler et de la teneur en oxygène (G) dans les gaz d'échappement.

6. Procédé selon la revendication 5, dans lequel l'excès d'air de consigne (SZ) se situe entre 1,2 et 1,4.

7. Procédé selon l'une des revendications 5 ou 6, **caractérisé en ce que** l'on fournit une quantité de combustible (B) régulée à l'étage de gazéification (10) de la chambre de combustion (2).

8. Procédé selon la revendication 7, **caractérisé en ce que** la régulation de la quantité de combustible fournie (B) à une valeur de consigne de la quantité de combustible (BS) est effectuée à l'aide d'un bilan oxygène comprenant une quantité d'oxygène (O1+O2) fournie avec l'air primaire (M1) et avec l'air secondaire (M2) avec déduction de la quantité d'oxygène (03) circulant dans le canal de gaz d'échappement (40).

9. Procédé selon l'une quelconque des revendications 5 à 8, **caractérisé en ce que** le régulateur de plusieurs grandeurs (30) simule le circuit de régulation, comprenant les valeurs de consigne (S1, S2) et la teneur en oxygène (G), pour l'adaptation des valeurs de consigne (S1, S2).

10. Procédé selon la revendication 9, **caractérisé en ce que**, lors de la simulation du circuit de régulation à l'aide des valeurs de consigne actuelles (S1, S2) et de la teneur en oxygène actuelle déterminée (G) dans le canal de gaz d'échappement (40), on calcule pour au moins un instant futur une teneur en oxygène anticipée (AG) dans le canal de gaz d'échappement (40) et on opère, à l'aide de la teneur en oxygène anticipée (AG), une adaptation des valeurs de consigne (S1, S2) afin de respecter l'excès d'air de consigne (SZ).
